(19) Europäisches Patentamt
European Patent Office
Office européen des brevets

(11) EP 4 520 501 A1

(12) EUROPEAN PATENT APPLICATION
published in accordance with Art. 153(4) EPC

(43) Date of publication:
**12.03.2025 Bulletin 2025/11**

(21) Application number: **22942793.5**

(22) Date of filing: **23.12.2022**

(51) International Patent Classification (IPC):
***B29B 17/00*** *(2006.01)*

(52) Cooperative Patent Classification (CPC):
**B29B 17/00;** Y02W 30/62

(86) International application number:
**PCT/JP2022/047569**

(87) International publication number:
**WO 2023/223592 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.05.2022 PCT/JP2022/020695**

(71) Applicant: **Kyoeisha Chemical Co., Ltd.**
**Osaka-shi, Osaka 541-0054 (JP)**

(72) Inventors:
- **ISHIKAWA, Makoto**
  **Nara-shi, Nara 630-8453 (JP)**
- **SHIGEEDA, Osamu**
  **Nara-shi, Nara 630-8453 (JP)**
- **KINUGAWA, Masashi**
  **Nara-shi, Nara 630-8453 (JP)**

(74) Representative: **Isarpatent**
**Patent- und Rechtsanwälte**
**Barth Hassa Peckmann & Partner mbB**
**Friedrichstraße 31**
**80801 München (DE)**

# (54) MULTILAYERED RESIN MOLDED BODY RECOVERY PRETREATMENT AGENT AND PRETREATMENT METHOD FOR MULTILAYERED RESIN MOLDED BODY RECOVERY

(57) Provided is a multi-layered resin molded body recovery pretreatment agent, which can prevent the contamination of resin films with a printing ink in a multi-layered resin molded body recovery pretreatment.

The multi-layered resin molded body recovery pretreatment agent includes (A) a polar solvent having an SP value of 9 to 13, (B) a quaternary ammonium salt represented by a general formula (1), and (C) a nonionic surfactant having an HLB of 11.0 to 14.0 and/or an anionic surfactant having a $C_{13}$ or higher fatty acid group.

EP 4 520 501 A1

## Description

Technical Field

The present invention relates to a multi-layered resin molded body recovery pretreatment agent and also to a pretreatment method for multi-layered resin molded body recovery.

Background Art

In order to meet the performance requirements as packaging materials and the like, a large number of multi-layered films formed by combining different kinds of materials have been put on the market. However, because films with different properties are laminated, such a material is difficult to separate, and this makes it difficult to perform material recycling for global environment protection and the like.

In order to solve these problems, a treatment in which a multi-layered film is immersed in a treatment agent solution to dissolve a specific layer such as an adhesive layer, thereby separating the multi-layered film into its constituent resins, has been considered (e.g., PTLs 1 and 2).

As one of the problems with such separation, the contamination of the recovered resin film with a printing ink can also be mentioned.

That is, packaging materials often have printing thereon to display the trade names, etc., or for decorative purposes. When a multi-layered film with such printing is subjected to separation and recovery, the printing ink will be contained in the treatment liquid.

Such a printing ink component is likely to adhere to the recovered resin. This causes the contamination of the resin, posing a major problem in the reuse of the resin.

PTL 1 describes a method for recovering a multi-layered film using a morpholine liquid. However, in the case where the morpholine content is more than 6%, such an aqueous solution is a deleterious substance, making the operation highly dangerous, and also special management is required for the aqueous solution.

PTL 2 describes a method for recovering a multi-layered film having a printed layer using a sodium hydroxide aqueous solution. However, the aqueous solution of this literature cannot prevent the re-adhesion of the ink, and exhibits a stripping effect only on a multi-layered film containing aluminum, aluminum oxide, and silica, making its use limited.

Citation List

Patent Literature

PTL 1: WO2020/059516
PTL 2: JP2020-175620A

Summary of Invention

Technical Problem

An object of the invention is to provide a multi-layered resin molded body recovery pretreatment agent, which can prevent the contamination of resin films with a printing ink in a multi-layered resin molded body recovery pretreatment.

Solution to Problems

The invention is a multi-layered resin molded body recovery pretreatment agent characterized by including:

(A) a polar solvent having an SP value of 9 to 13;
(B) a quaternary ammonium salt represented by the following general formula (1):

[Chemical formula 1]

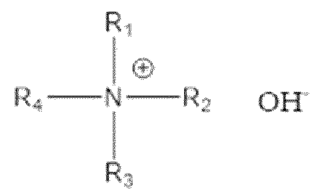

(1)

wherein $R_1$ to $R_4$ are the same or different and each represent hydrogen or a $C_{1-6}$ aliphatic hydrocarbon group optionally having one hydroxyl group; and

(C) a nonionic surfactant having an HLB of 11.0 to 14.0 and/or an anionic surfactant having a $C_{13}$ or higher fatty acid group.

It is preferable that the multi-layered resin molded body recovery pretreatment agent of the invention has a water content of 5 mass% or more.

It is preferable that the polar solvent is at least one member selected from the group consisting of ethylene glycol monobutyl ether, N-methyl-2-pyrrolidone (NMP), isopropanol, dimethylformamide (DMF), dimethyl sulfoxide (DMSO), and phenyl glycol.

It is preferable that a 1 mass% aqueous solution of the quaternary ammonium salt has a pH of 11.5 or more.

It is preferable that the (C) is oleate salt and/or polyethylene glycol monooleate.

The invention is also a pretreatment method for multi-layered resin molded body recovery, characterized by including a step of immersing a multi-layered resin molded body having a printed layer in the multi-layered resin molded body recovery pretreatment agent according to any one of the above.

(Advantageous Effects of Invention)

According to the multi-layered resin molded body recovery pretreatment agent of the invention, upon the recovery of resin components constituting a multi-layered resin molded body by dissolving only some of the layers, such as an adhesive layer and an EVOH layer, from the multi-layered resin molded body, the adhesion of a printing ink component to the recovered resin can be suppressed.

Description of Embodiments

The invention is a multi-layered resin molded body recovery pretreatment agent characterized by containing (A) a polar solvent having an SP value of 9 to 13,

(B) a quaternary ammonium salt, and (C) a nonionic surfactant having an HLB of 11.0 to 14.0 and/or an anionic surfactant having a $C_{13}$ or higher fatty acid group.

According to such a multi-layered resin molded body recovery pretreatment agent, the polar solvent and the quaternary ammonium salt dissolve part of the multi-layered structure, such as an adhesive in a resin or an EVOH resin, and, as a result, a multi-layered film can be separated into layers. During such dissolution, the printed layer is also compatibilized and dispersed, and the printing ink component thus exists in the treatment liquid. Such an ink component does not have high affinity for the solvent and does not dissolve in water either, and thus is likely to re-adhere to the separated resin components during rinsing.

The multi-layered resin molded body recovery pretreatment agent of the invention contains (C) a nonionic surfactant having an HLB of 11.0 to 14.0 and/or an anionic surfactant having a $C_{13}$ or higher fatty acid group. As a result, the compatibilization and dispersion performance of such a printing ink component in the treatment liquid can be enhanced, and this significantly suppresses its adhesion onto the separated resin components.

As a result of using a polar solvent having a specific SP value, an adhesive layer or EVOH can be dissolved. Further, the dissolution of the adhesive layer or EVOH existing between layers of a multi-layered resin molded body is promoted. In addition, as a result of using a quaternary ammonium salt, the dissolution of the adhesive layer or EVOH can be promoted. In addition, as a result of using them together, the penetration of the multi-layered resin molded body recovery pretreatment agent between layers of a multi-layered resin molded body is improved, and the adhesive layer or EVOH existing between layers can be sufficiently dissolved.

The polar solvent used in the invention needs to have an SP value of 9 to 13.

The SP value (solubility parameter ($\delta$)) is a value defined by the regular solution theory introduced by Hildebrand, and is calculated from the square root $(cal/cm^3)^{1/2}$ of the heat of vaporization required to evaporate 1 $cm^3$ of a liquid.

In the invention, use of a polar solvent having an SP value within this range helps an organic alkaline compound,

which is present in the multi-layered resin molded body recovery pretreatment agent, act on the adhesive layer or EVOH existing between layers of a multi-layered resin molded body, allowing for sufficient dissolution thereof.

In the invention, the SP value of the polar solvent used is preferably 10 or more. Meanwhile, the SP value is preferably 12 or less.

As polar solvents having the above SP value, specifically, diethylene glycol monobutyl ether (SP value: 9.0), N-methyl-2-pyrrolidone (NMP) (SP value: 11.2), isopropanol (SP value: 11.5), dimethyl formamide (DMF) (SP value: 11.9), dimethyl sulfoxide ((DMSO) SP value: 12.0), benzyl alcohol (SP value: 10.8), phenyl glycol (SP value: 12.4), and the like can be mentioned. They may be used alone, and it is also possible to use two or more kinds together. Among them, NMP is preferable.

The quaternary ammonium salt (B) used in the invention is a compound represented by the following general formula (1).

[Chemical formula 2]

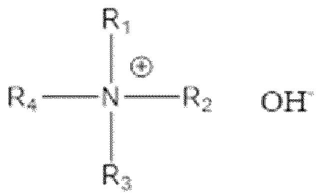

(1)

(In the formula, $R_1$ to $R_4$ are the same or different and each represent hydrogen or a $C_{1-6}$ aliphatic hydrocarbon group optionally having one hydroxyl group.)

Incidentally, when $R_1$ to $R_4$ having a $C_7$ or higher hydrocarbon group are used, the resulting salt has strong properties as a cationic surfactant; therefore, this is not preferable.

In the invention, the quaternary ammonium salt (B) is a component that is transferred to dissolve the adhesive. In the invention, by using (C) as a surfactant, which will be described in detail below, the adhesion of an ink is prevented. Therefore, it is more preferable that the quaternary ammonium salt (B) does not have properties as a cationic surfactant.

It is favorable that a 1 mass% aqueous solution of the quaternary ammonium salt (B) has a pH of 11.5 or more. The pH within this range is advantageous in that the adhesive can be dissolved.

As quaternary ammonium salts used in the invention, specifically, dimethyl bis(2-hydroxyethyl)ammonium hydroxide (the above pH: 12.3), monomethyl tris(2-hydroxyethyl)ammonium hydroxide (the above pH: 12.1), trimethyl-2-hydroxyethyl ammonium hydroxide (the above pH: 12.5), a tetraalkyl ammonium hydroxide whose 1 mass% aqueous solution has a pH of 11.5 or more (as an example, tetramethyl ammonium hydroxide (the above pH: 12.9)), and the like can be mentioned.

Among them, dimethyl bis(2-hydroxyethyl)ammonium hydroxide and the like are preferable.

Further, the multi-layered resin molded body recovery pretreatment agent of the invention contains a specific surfactant. As a result of containing a surfactant, the agent can compatibilize and disperse the printing ink remaining in the multi-layered resin molded body such as a film. As a result, the printing ink does not contaminate resins that are recovered; therefore, this is preferable.

The above surfactant is (C) a nonionic surfactant having an HLB of 11.0 to 14.0 and/or an anionic surfactant having a $C_{13}$ or higher fatty acid group. That is, because the surfactant has a specific emulsifying ability, the object of the invention can be favorably achieved.

Incidentally, in the invention, HLB is a value defined by Griffin's method using the following calculation formula.

$$\text{HLB value} = 20 \times [\text{total formula weight of hydrophilic portion}]/\text{molecular weight}$$

As nonionic surfactants, ether types such as polyoxyethylene alkyl ethers and polyoxyethylene alkylphenyl ethers;

ester types such as glycerin fatty acid esters, sorbitan fatty acid esters, sucrose fatty acid esters, polyglycerin fatty acid esters, and propylene glycol fatty acid esters;

ester ether types such as polyoxyethylene glycerin fatty acid esters, polyoxyethylene castor oil, polyoxyethylene hydrogenated castor oil, polyoxyethylene sorbitan fatty acid esters, sorbitan fatty acid ester polyethylene glycol, and fatty acid polyethylene glycol; and the like can be mentioned.

Among them, fatty acid polyethylene glycol, polyoxyethylene alkyl ethers, polyoxypropylene alkyl ethers, and the

like are preferable.

Among the above various nonionic surfactants, those having an HLB of 11.0 to 14.0 are preferable. It is more preferable that the HLB is 11.5 to 13.5.

As the anionic surfactant, an alkali metal salt, ammonium salt, or quaternary amine salt of a $C_{13}$ or higher fatty acid, which can be uniformly dissolved in the present composition, for example, can be mentioned. The number of carbon atoms in the fatty acid is more preferably 14 or more. The upper limit of the number of carbon atoms in the fatty acid is not particularly set, but is preferably 30 or less.

As the $C_{13}$ or higher fatty acid, specifically, for example, oleic acid ($C_{18}$), stearic acid ($C_{18}$), palmitic acid ($C_{16}$), myristic acid ($C_{14}$), linoleic acid ($C_{18}$), or the like can be mentioned. In addition, although it may be a saturated fatty acid or an unsaturated fatty acid, it is particularly preferable to use an unsaturated fatty acid.

More specifically, it is most preferable to use oleic acid.

In addition, the above surfactants may be used alone, and it is also possible to use two or more kinds together.

In addition, it is preferable that the surfactant content in the multi-layered resin molded body recovery pretreatment agent is 0.1 to 5 mass%.

It is preferable that the multi-layered resin molded body recovery pretreatment agent of the invention is used as an aqueous solution.

It is preferable that the water content in the multi-layered resin molded body recovery pretreatment agent aqueous solution is 5 mass% or more. The content is more preferably 10 mass% or more.

Meanwhile, the upper limit is preferably 40 mass%, and more preferably 30 mass%.

When the water content is within the above range, a uniform state can be maintained during mixing as a solution, and also excellent adhesive or EVOH solubility can be exhibited.

In the multi-layered resin molded body recovery pretreatment agent aqueous solution, the polar solvent is preferably contained in an amount of 50 to 90 mass%. The lower limit of the content is more preferably 60 mass%, and still more preferably 65 mass%. Meanwhile, the upper limit of the content is more preferably 80 mass%, and still more preferably 75 mass%.

In the multi-layered resin molded body recovery pretreatment agent aqueous solution, the quaternary ammonium salt is preferably contained in an amount of 1 to 20 mass%. The lower limit of the content is more preferably 3 mass%, and still more preferably 5 mass%. Meanwhile, the upper limit of the content is more preferably 18 mass%, and still more preferably 15 mass%.

In addition, the ratio between the polar solvent and the quaternary ammonium salt is preferably 20:1 to 5:1 (mass ratio).

The multi-layered resin molded body recovery pretreatment agent of the invention may further contain a compatibilizer. In some cases, depending on its composition, a composition containing the above components is not completely homogenized, and undergoes separation when left to stand. In such a case, a compatibilizer may be added to compatibilize the components.

The compatibilizer is a component for uniformly mixing the polar solvent, quaternary ammonium salt, and water contained in the present composition when it is difficult to uniformly mix them. The compatibilizer is not particularly limited as long as it has such properties. Specifically, for example, a polyoxyalkyl ether, coconut oil fatty acid diethanolamide, or the like can be used as a nonionic surfactant, and a sodium alkylbenzene sulfonate, sodium p-toluenesulfonate, or the like can be used as an anionic surfactant. Incidentally, in the case where a nonionic surfactant is used as the compatibilizer, the surfactants that can be used as the component (C) described above do not fall under the category of compatibilizers. It is preferable that the nonionic surfactant used as a compatibilizer here has an HLB of more than 14.0 and 20.0 or less.

In the case where the multi-layered resin molded body recovery pretreatment agent of the invention contains the compatibilizer, the content is preferably 0.1 to 20 wt% based on the total amount of the treatment agent. When the content is within this range, the above object can be achieved. It is preferable that the lower limit is 1.0 wt%, and more preferably 2.0 wt%.

The multi-layered resin molded body of interest in the invention is not particularly limited, and, for example, packaging materials such as films and sheets for packaging and packaging containers, fuel tanks for gasoline and the like, hoses for refrigerant transportation, optical materials, and like commonly used items can be mentioned. The shape thereof is not particularly limited either, and a hollow body, a film, and the like can be mentioned.

Such a multi-layered resin molded body is a multi-layered body formed of a combination of two or more kinds of resin layers.

It may usually be a multi-layered resin molded body having, as constituent units, an olefin-based resin layer made of polyethylene, polypropylene, or the like, a polyester resin layer made of polyethylene terephthalate, polyethylene naphthalate, or the like, a polyamide-based resin layer, and the like.

In the case where the multi-layered resin molded body is a multi-layered film, unstretched polyethylene (PE) resin films, unstretched polypropylene (CPP) resin films, cyclic polyolefin (COP or COC) resin films, a group of olefin-based films consisting of unstretched polyethylene and unstretched polypropylene (PE/CPP) co-extruded films, polyethylene

terephthalate (PET) resin films, polyamide (PA) resin films, polyethylene naphthalate (PEN) resin films, polyacrylonitrile (PAN) resin films, polycarbonate (PC) resin films, polyimide (PI) resin films, polyvinyl chloride (PVC) resin films, and the like are used. In the invention, any of them may be used.

In addition, as a resin molded body or multi-layered film having an EVOH layer, a multi-layered body having three or more layers including EVOH as an intermediate layer combined with two or more kinds of the above resins may also be used.

EVOH is a resin usually obtained by copolymerizing ethylene and a vinyl ester-based monomer, followed by saponification, and vinyl acetate is commonly used. The polymerization method may also be known any polymerization method, such as solution polymerization, suspension polymerization, emulsion polymerization, or the like, and solution polymerization using methanol as a solvent is commonly used. The saponification of the obtained ethylene-vinyl ester copolymer can also be performed by a known method. Such EVOH is composed mainly of an ethylene structural unit and a vinyl alcohol structural unit, and contains some amount of unsaponified residual vinyl ester structural unit.

The invention can act particularly favorably on EVOH having an ethylene unit content of preferably 3 to 70 mol%, and more preferably 25 to 50 mol%.

The ethylene unit content can be determined, for example, from $^1$H-NMR measurement.

The degree of saponification of the vinyl ester component in EVOH is not particularly limited as long as the gas barrier properties of EVOH, as its characteristics, are not affected.

Incidentally, EVOH may further contain structural units derived from the following comonomers. As the comonomers, α-olefins such as propylene, isobutene, vinyl acetate, α-octene, α-dodecene, and α-octadecene, hydroxy group-containing α-olefins such as 3-buten-1-ol, 4-penten-1-ol, and 3-butene-1,2-diol and their esterified products, acylated products, and like hydroxy group-containing α-olefin derivatives, unsaturated carboxylic acids and their salts, partial alkyl esters, complete alkyl esters, nitriles, amides, and anhydrides, unsaturated sulfonic acids and their salts, vinyl silane compounds, vinyl chloride, styrene, and like comonomers can be mentioned. Further, it may also be an EVOH-based resin that has undergone "post-modification" such as urethanization, acetalization, cyanoethylation, or oxyalkylenation.

Further, it may also be a multi-layered resin molded body having a non-resin layer, such as a metal foil layer. In food packaging containers, standing pouches used for toiletry products, laminated tubes, pharmaceutical packaging materials, and the like, in order to improve gas barrier properties, multi-layered resin molded bodies having a metal layer such as an aluminum foil layer are widely used. Even in such a multi-layered resin molded body, the multi-layered resin molded body recovery pretreatment agent of the invention can be used to dissolve and remove the metal foil layer and separate resin layers. In the case where such a treatment of a multi-layered resin molded body is performed, the metal foil layer can be dissolved and removed, promoting the recycling of resin layers free of metal component; therefore, this is preferable.

Further, it can also be used to treat a multi-layered resin molded body having a vapor deposition layer of aluminum, aluminum oxide, silica, or the like. Many packaging containers, etc., having these vapor deposition layers are known. Also when regenerating such multi-layered laminates, the multi-layered resin molded body recovery pretreatment agent of the invention can be favorably used.

The vapor deposition layer is not particularly limited in its composition and formation method. It is preferable that the vapor deposition layer is composed of a non-crystalline (amorphous) layer. In addition, from the viewpoint of visible light transmittance, aluminum oxide and/or silica is preferable. In order to achieve a form that exhibits light-blocking properties, aluminum is preferable. A desorption layer (A) may have two or more vapor deposition layers. In the case where two or more vapor deposition layers are present, they may be the same in composition or different in composition. Incidentally, in the case where a desorption layer (A) having a vapor deposition layer is present, before desorption is performed using a basic aqueous solution, it also functions as an oxygen and/or water vapor barrier layer.

It is preferable that a vapor deposition layer composed of aluminum oxide and silica is in the form of containing $Al_2O_3$ and $SiO_2$, respectively. For example, in the case of expressing aluminum oxide in the form of AlOn, silica in the form of SiOn, etc., the value of n may be within a range of 0.5 to 1.5 for aluminum oxide, and within a range of 1 to 2 for silica, and the forms of aluminum oxide and silica other than $Al_2O_3$ and $SiO_2$ are not excluded. Meanwhile, in terms of light blocking properties, it is preferable that a vapor deposition layer formed from aluminum is preferably a vapor deposition film formed substantially only from aluminum.

The film thickness of the vapor deposition film composed of at least one member selected from the group consisting of aluminum, aluminum oxide, and silica may be within a range of 1 to 400 nm, and is preferably within a range of 5 to 300 nm, and more preferably within a range of 10 to 200 nm.

In the case of a vapor deposition layer of aluminum, the film thickness is preferably 5 to 300 nm, more preferably 10 to 100 nm, and still more preferably 10 to 60 nm. In addition, in the case of a vapor deposition layer of aluminum oxide and/or silica, the film thickness is preferably 5 to 300 nm, more preferably 10 to 100 nm, and still more preferably 10 to 60 nm. The film thickness of a vapor deposition film can be measured by a fundamental parameter method using, for example, a fluorescent X-ray analyzer manufactured by Hitachi High-Tech Science Corporation (model name: EA6000VX or

EA8000).

In addition, the multi-layered resin molded body may be obtained by bonding layers using an adhesive. As adhesives, commonly used polyurethane adhesive compositions and the like can be mentioned. These adhesives are dissolved by the quaternary ammonium salt in the multi-layered resin molded body recovery pretreatment agent of the invention.

It is preferable the multi-layered resin molded body further has a printed layer. The multi-layered resin molded body recovery pretreatment agent of the invention makes it unlikely that a printing ink adheres to the surface of the recovered resin or the like, and thus can be particularly favorably used for treating molded bodies having a printed layer.

The printed layer refers to a layer formed from a printing ink, and favorable examples of printing inks are screen inks, gravure inks, flexo inks, inkjet inks, offset inks, and the like.

Among them, it is preferable to use a gravure ink, a flexo ink, or an inkjet ink, and it is more preferable to use a gravure ink and/or a flexo ink.

As binder resins to be contained in the printed layer, polyurethane resins, cellulose-based resins, polyamide resins, vinyl chloride-based resins such as vinyl chloride-vinyl acetate copolymer resins and vinyl chloride-acrylic-based copolymer resins, chlorinated polyolefins, ethylene vinyl acetate copolymers, chlorinated ethylene vinyl acetate copolymers, rosin-based resins, ethylene-vinyl acetate copolymer resins, vinyl acetate resins, acrylic resins, styrene resins, dammar resins, styrene-maleic acid copolymer resins, polyester resins, alkyd resins, terpene resins, phenol-modified terpene resins, ketone resins, cyclized rubbers, chlorinated rubbers, butyral, polyacetal resins, petroleum resins, modified resins thereof, and the like can be favorably mentioned. These resins can be used alone or as a mixture of two or more kinds.

Among the above resins, it is preferable that at least one binder resin selected from the group consisting of polyurethane resins, vinyl chloride-vinyl acetate copolymer resins, polyamide resins, acrylic resins, polyester resins, rosin resins, and cellulose resins is contained. Further, it is preferable that the binder resin contains a combination of two kinds of resins, such as a polyurethane resin and a vinyl chloride-vinyl acetate copolymer resin, a polyamide resin and a cellulose resin, or an acrylic resin and a cellulose resin, in an amount of 50 mass% or more based on the total binder resin mass, and it is more preferable that the mass ratio of former:latter is 95:5 to 30:70.

The printed layer preferably contains a colorant. The colorant is preferably a pigment, and, for example, as organic pigments, although they are not limited to the following examples, soluble azo-based, insoluble azo-based, azo-based, phthalocyanine-based, halogenated phthalocyanine-based, anthraquinone-based, anthanthrone-based, dianthraquinonyl-based, anthrapyrimidine-based, perylene-based, perinone-based, quinacridone-based, thioindigo-based, dioxazine-based, isoindolinone-based, quinophthalone-based, azomethine azo-based, flavanthrone-based, diketopyrrolopyrrole-based, isoindoline-based, indanthrone-based, carbon black-based, and like pigments can be favorably mentioned. In addition, for example, carmine 6B, lake red C, permanent red 2B, disazo yellow, pyrazolone orange, carmine FB, cromophtal yellow, cromophtal red, phthalocyanine blue, phthalocyanine green, dioxazine violet, quinacridone magenta, quinacridone red, indanthrone blue, pyrimidine yellow, thioindigo bordeaux, thioindigo magenta, perylene red, perinone orange, isoindolinone yellow, aniline black, diketopyrrolopyrrole red, daylight fluorescent pigments, and the like can be favorably mentioned. Incidentally, C.I. pigments described in the Color Index can be suitably used.

The multi-layered resin molded body recovery pretreatment method of the invention is a method in which the multi-layered resin molded body recovery pretreatment agent of the invention is applied to a multi-layered resin molded body to extract the adhesive layer or EVOH. For example, a method in which a multi-layered resin molded body is immersed in the multi-layered resin molded body recovery pretreatment agent solution described above is favorable.

The form of the multi-layered resin molded body may be arbitrarily set. The molded body may be used as it is, or may also be suitably crushed, pulverized, etc., into small pieces, granules, or the like and then immersed.

In addition, the temperature of the solution during the multi-layered film recovery pretreatment may be ordinary temperature, but is preferably 60 to 100°C. In addition, the treatment may also be performed using an autoclave or the like.

In addition, during the multi-layered film recovery pretreatment, it is favorable that the solution having the multi-layered resin molded body immersed therein is subjected to stirring, shaking, or the like.

As a result of using the multi-layered resin molded body recovery pretreatment agent of the invention, the adhesive, EVOH, or the like in the multi-layered resin molded body is selectively dissolved, and other layers constituting the multi-layered resin molded body are separated and each disassembled into an independent state.

The resin components recovered and separated in this manner may be, as material recycling, directly used as regenerated resins. Further, such a resin component may also be utilized as a raw material for chemical recycling, in which a polymer is chemically treated into a raw material and reused as a polymer raw material. For example, in the case where a polyamide resin is recovered, the polyamide resin can be decomposed into monomers and utilized.

Further, the multi-layered resin molded body recovery pretreatment agent of the invention may also have a step of distilling off water and/or the polar solvent from the residual liquid after the pretreatment.

The distillation may be performed using a common apparatus according to a common method, and the conditions therefor may also be suitably set.

In the distillation step, even in the case where the polar solvent in the multi-layered resin molded body recovery pretreatment agent has a boiling point equal to or lower than the boiling point of water, its removal is sometimes difficult due to the presence of the quaternary ammonium salt. Thus, in the distillation step, such a polar solvent remains to some extent, and water is removed.

In addition, the method may also include a step of adding a polar solvent and/or water to the residue obtained in the distillation step. That is, when a polar solvent and/or water is added to the residue obtained by distillation, and each mixing proportion is adjusted, the resulting mixture can be used for a pretreatment agent for multi-layered film recovery as a multi-layered resin molded body recovery pretreatment agent.

After the multi-layered film is pretreated with the invention, the separated multi-layered film can be separated into its constituent resin components by a known method, and then each resin can be reused.

In this manner, according to the invention, the components constituting a multi-layered film can each be regenerated and utilized again, and this can help protect the global environment, for example.

## Examples

Hereinafter, the invention will be described in detail based on the examples. Incidentally, the invention is not limited to the following examples. Unless otherwise specified, "parts" and "%" in the examples mean "parts by mass" and "mass%".

### [Examples 1 to 6, Comparative Examples 1 to 10]

Multi-layered resin molded body recovery pretreatment agents containing components (A) to (C) in the proportions shown in Table 1 were prepared.

Using each obtained multi-layered resin molded body recovery pretreatment agent, a multi-layered resin molded body was subjected to a recovery pretreatment.

The treatment was performed under the following conditions. Incidentally, the multi-layered resin molded body used in this treatment was a multi-layered resin molded body having the following structure: polyamide/printed layer/-adhesive layer/polyethylene.

### (Method for Recovery Pretreatment on Multi-Layered Resin Molded Body)

The procedure and method for obtaining a polyamide-based resin composition and a polyolefin-based resin composition by separation and regeneration from a multi-layered resin molded body using a stripper are as follows.

First, a multi-layered resin molded body is cut in a pulverizer to prepare fluff.

Next, the fluff is subjected to normal pressure and heating conditions, and the fluff is immersed in a stripper and stirred to dissolve, compatibilize, and disperse the adhesive layer, the printed layer, various resins, and the like. The temperature and time for immersion and stirring are, for example, preferably 1 to 5 days, and more preferably 2 to 4 days, under conditions of 20°C or more and less than 60°C. Under conditions of 60°C or more, the time is preferably 1 to 5 hours, and more preferably 2 to 4 hours.

Subsequently, the resin composition insoluble in the stripper is taken out and washed with water or the like for the purpose of removing the stripper. The resin composition contains polyamide-based resin fluff and polyolefin-based resin fluff, which are insoluble in the stripper.

Subsequently, using water, for example, the resin composition is stirred in water at 25°C and then allowed to stand, and thus, utilizing the specific gravity difference between the polyamide-based resin having a specific gravity of 1.00 to 1.25 and the polyolefin-based resin having a specific gravity of 0.870 to 0.970, the two are classified (specific gravity difference classification), followed by drying under warm air conditions and the like.

Incidentally, in the case where the multi-layered resin molded body contains several kinds of polyamide-based resins, they are all classified as the polyamide-based resin fluff. Similarly, in the case where several kinds of polyolefin-based resins are contained, they are all classified as the polyolefin-based resin fluff.

The results of the above treatment were evaluated according to the following criteria.

### (Film Strippability)

AA: Extremely quick and complete stripping was observed
A: Complete stripping was observed
B: Some stripping was seen, but it was insufficient

C: No stripping occurred at all

(Film Staining Prevention)

A: Film staining occured only slightly
B: Staining was seen in the film
C: Extremely strong staining was seen in the film

[Table 1]

| | Example 1 | Example 2 | Example 3 | Example 4 | Example 5 | Example 6 |
|---|---|---|---|---|---|---|
| NMP | 69 | 69 | 28 | 28 | | |
| Phenyl glycol | | | 46 | 46 | 60 | 60 |
| Quarternary ammonium salt | 7.5 | 7.5 | 6.5 | 6.5 | 6.5 | 6.5 |
| Sodium p-toluenesulfonate | | | | | 15 | |
| Coconut oil fatty acid diethanolamide | | | | | | 20 |
| Water | 22.5 | 22.5 | 18.5 | 18.5 | 17.5 | 12.5 |
| Potassium oleate ($C_{18}$) | 1 | | 1 | | | |
| Polyethylene glycol monooleate (HLB:12.0) | | 1 | | 1 | 1 | 1 |
| Film strippability | AA | AA | AA | AA | AA | AA |
| Film staining prevenion | A | A | A | A | A | A |

[Table 2]

| | Example 7 | Example 8 | Example 9 | Example 10 |
|---|---|---|---|---|
| NMP | 28 | 28 | 28 | 28 |
| Phenyl glycol | | | | |
| Ethylene glycol monobutyl ether | 46 | | | |
| Isopropanol | | 46 | | |
| DMF | | | 46 | |
| DMSO | | | | 46 |
| Quarternary ammonium salt | 6.5 | 6.5 | 6.5 | 6.5 |
| Sodium p-toluenesulfonate | | | | |
| Coconut oil fatty acid diethanolamide | | | | |
| Water | 18.5 | 18.5 | 18.5 | 18.5 |
| Potassium oleate | | | | |
| Polyethylene glycol monooleate | 1 | 1 | 1 | 1 |
| Film strippability | AA | AA | AA | AA |
| Film staining prevenion | A | A | A | A |

[Table 3]

| | Comparative Example 1 | Comparative Example 2 | Comparative Example 3 | Comparative Example 4 | Comparative Fxample 5 | Comparative Fxample 6 |
|---|---|---|---|---|---|---|
| NMP | 70 | 70 | 28 | 28 | | |
| Phenyl glycol | | | 47 | 47 | 60 | 60 |
| Quarternary ammonium salt | 7.5 | 7.5 | 6.5 | 6.5 | 6.5 | 6.5 |
| Sodium p-toluenesulfonate | | | | | 15 | |
| Coconut oil fatty acid diethanolamide | | | | | | 20 |
| Water | 22.5 | 22.5 | 18.5 | 18.5 | 18.5 | 13.5 |
| Potassium oleate | | | | | | |
| Polyethylene glycol monooleate | | | | | | |
| Film strippability | AA | AA | AA | AA | AA | AA |
| Film staining prevenion | C | C | C | C | C | C |

[Table 4]

| | Comparative Example 7 | Comparative Example 8 | Comparative Example 9 | Comparative Example 10 |
|---|---|---|---|---|
| NMP | 69 | 69 | 28 | 28 |
| Phenyl glycol | | | 46 | 46 |
| Quarternary ammonium salt | 7.5 | 7.5 | 6.5 | 6.5 |
| Sodium p-toluenesulfonate | | | | |
| Coconut oil fatty acid diethanolamide | | | | |
| Water | 22.5 | 22.5 | 18.5 | 18.5 |
| Potassium octanoate ($C_8$) | 1 | | 1 | |
| Polyethylene glycol monooleate (HLB:17.2) | | 1 | | 1 |
| Film strippability | AA | AA | AA | AA |
| Film staining prevenion | C | C | C | C |

Incidentally, in the above Tables 1 to 4, dimethylbis(2-hydroxyethyl)ammonium hydroxide was used as the quaternary ammonium salt.

From the results of the above examples and comparative examples, the multi-layered resin molded body recovery pretreatment agent of the invention is excellent in film strippability and also excellent in film staining prevention performance.

(Industrial Applicability)

The invention can be used in a pretreatment for multi-layered resin molded body recovery. Use of the multi-layered film recovery pretreatment agent of the invention makes it possible to separate a multi-layered resin molded body into its several constituent layers, which can be favorably used as a pretreatment for recovering them.

## Claims

1. A multi-layered resin molded body recovery pretreatment agent comprising:

(A) a polar solvent having an SP value of 9 to 13;
(B) a quaternary ammonium salt represented by the following general formula (1):

[Chemical formula 1]

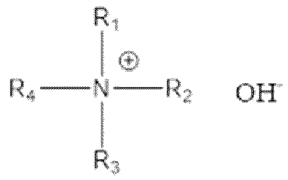

(1)

wherein $R_1$ to $R_4$ are the same or different and each represent hydrogen or a $C_{1-6}$ aliphatic hydrocarbon group optionally having one hydroxyl group; and
(C) a nonionic surfactant having an HLB of 11.0 to 14.0 and/or an anionic surfactant having a $C_{13}$ or higher fatty acid group.

2. The multi-layered resin molded body recovery pretreatment agent according to claim 1, having a water content of 5 mass% or more.

3. The multi-layered resin molded body recovery pretreatment agent according to claim 1 or 2, wherein the polar solvent is at least one member selected from the group consisting of ethylene glycol monobutyl ether, N-methyl-2-pyrrolidone (NMP), isopropanol, dimethylformamide (DMF), dimethyl sulfoxide (DMSO), and phenyl glycol.

4. The multi-layered resin molded body recovery pretreatment agent according to claim 1 or 2, wherein a 1 mass% aqueous solution of the quaternary ammonium salt has a pH of 11.5 or more.

5. The multi-layered resin molded body recovery pretreatment agent according to claim 1 or 2, wherein the (C) is oleate salt and/or polyethylene glycol monooleate.

6. A pretreatment method for multi-layered resin molded body recovery, comprising a step of immersing a multi-layered resin molded body having a printed layer in the multi-layered resin molded body recovery pretreatment agent according to claim 1 or 2.

## INTERNATIONAL SEARCH REPORT

International application No.
**PCT/JP2022/047569**

**A. CLASSIFICATION OF SUBJECT MATTER**

***B29B 17/00***(2006.01)i
FI: B29B17/00

According to International Patent Classification (IPC) or to both national classification and IPC

**B. FIELDS SEARCHED**

Minimum documentation searched (classification system followed by classification symbols)

B29B17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P, X<br>A | WO 2022/158287 A1 (KYOEISHA CHEMICAL CO., LTD.) 28 July 2022 (2022-07-28) paragraph [0028], examples 5, 10, tables 2, 3 | 1-4, 6<br>5 |
| Y<br>A | JP 2000-095893 A (TSUKASA KAKEN K.K.) 04 April 2000 (2000-04-04) claims, paragraphs [0006], [0008], [0019], example 7 | 1-4, 6<br>5 |
| P, Y<br>A | JP 2022-151607 A (MITSUBISHI CHEMICAL CORP.) 07 October 2022 (2022-10-07) paragraphs [0054], [0055], [0065] | 1-4, 6<br>5 |
| Y<br>A | JP 2019-112498 A (KAO CORP.) 11 July 2019 (2019-07-11) claim 1, paragraph [0020], examples 1-6 | 1-4, 6<br>5 |
| A | US 2013/0261197 A1 (BACCHIOCCHI LUIGI) 03 October 2013 (2013-10-03) claims, paragraph [0004], example 1 | 1-6 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/047569**

| Patent document cited in search report | Publication date (day/month/year) | Patent family member(s) | Publication date (day/month/year) |
|---|---|---|---|
| WO 2022/158287 A1 | 28 July 2022 | WO 2022/157928 A1<br>example 5, table 2 | |
| JP 2000-095893 A | 04 April 2000 | (Family: none) | |
| JP 2022-151607 A | 07 October 2022 | (Family: none) | |
| JP 2019-112498 A | 11 July 2019 | (Family: none) | |
| US 2013/0261197 A1 | 03 October 2013 | WO 2013/151640 A2<br>EP 2834293 A2<br>CN 105008508 A<br>ES 2703932 T3 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020059516 A
- JP 2020175620 A